Europäisches Patentamt

European Patent Office

Office européen des brevets

(11) Publication number: **0 291 131**

**A1**

(12) **EUROPEAN PATENT APPLICATION**

(21) Application number: 88200927.7

(22) Date of filing: 09.05.88

(51) Int. Cl.⁴: **H02J 7/00 , H01M 2/10 , H01M 10/42**

(30) Priority: **15.05.87 NL 8701180**

(43) Date of publication of application:
**17.11.88 Bulletin 88/46**

(84) Designated Contracting States:
**CH DE ES FR GB IT LI NL**

(71) Applicant: **EMERSON ELECTRIC CO.**
**Konijnenberg 60**
**NL-4825 BD Breda(NL)**

(72) Inventor: **Houben, Jan Peter**
**Rechterenstraat 56**
**NL-4834 LV Breda(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Tool for intermediate voltage.**

(57) By providing an electrical appliance, such as a hand tool, with a separate battery unit, the capacity of such a battery unit can be substantially enlarged in comparison with appliances wherein the battery has been located in the housing of the appliance. By using a voltage of an intermediate level, i.e., about a magnitude of about 50 V, currents are reduced so that a relatively thin conductor between the appliance and the battery unit will be sufficient. Consequently this conductor does not impede the user of the electrical appliance. Further - in comparison with the mains voltage - the requirements for and consequently the thickness of the insulation is considerably less. Further a mains supply unit is provided which can both be used for loading the battery unit and for supplying electrical energy to the appliance.

FIG. 1

## Tool for intermediate voltage

The current invention relates to electrical appliances such as hand tools which are connected by means of a cable to a separate power supply unit.

Such electrical appliances are generally known, in the form of appliances which are supplied by way of the mains and appliances that are powered by means of a battery generally built into the appliance.

The drawback of appliances powered through the mains is that such appliances can only be used when a mains connection is available. The relevant mains voltage must furthermore correspond with that for which the appliance is suitable.

In addition the mains voltage is comparatively high which entails strict safety and insulation requirements having to be met.

Usually used in such appliances is a commutator motor, which tends to act as a source of interference. Because the appliance is connected to the mains the thus created interference is easily spread.

The use of such appliances is often required at places which are far removed from a mains voltage connection so that a lead of great length has to be used, and this is not practical.

However, electrical hand tools provided with a built in buttery suffer from other drawbacks; since batteries are comparatively heavy, the size and weight of such an appliance often assumes undesired forms, with the result that the hand tool is awkward to handle. An effort is therefore made to make the hand tool nevertheless manageable to some extent and to restrict the weight as far as possible by employing a battery with a small storage capacity. The consequence here is that such appliances are less suitable for performing operations requiring great power, such as hammer drilling for example, since the battery cannot provide the required power.

Such appliances are also less suitable for operations that have to be continued for a longer period of time, for example sanding or hedge-trimming, since the energy of the battery is exhausted rapidly and it must be recharged.

Because of the small number of incorporated battery cells the voltage is low so that relatively large currents flow within the appliance and thick conductors have to be used.

The invention has for its object to avoid the above mentioned drawbacks by providing electrical appliances, such as hand tools, which are characterized in that they are connected by means of a cable to a separate power supply unit and that the nominal value of the supply voltage is greater than 24V but smaller than 110V.

As a result of using a separate power supply unit it becomes possible to considerably enlarge the storage capacity for electrical energy and the power capacity so that-independently of a mains connection - operations can be performed with the tool that require a large power which extend over a long period of time.

In addition the dimensions of the appliance can be limited since it is no longer necessary to fit storage elements for electrical energy in the appliance.

As a result of using a voltage level that is high relative to usual battery voltage, large currents are avoided so that the cable between the tool and the power supply unit may be comparatively thin.

Further related to this is that, as a result of the voltage level being low relative to mains voltage, insulation requirements are considerably less stringent and this has a positive effect on the thickness of the cable, it being even possible to use a spiral cord. Because the power supply unit can be carried on the body, the length of the cable can also be limited. The disadvantages of a cable connection are hereby considerably reduced.

Because there is no longer a direct connection with the mains the danger of radio interference is considerably lessened.

Once a tool is available that can be used at such a voltage as well as a power supply unit provided with a battery for this voltage, it is of course a good idea to purchase other tools for this voltage level. It is then also an attractive proposition to have available a power supply unit which draws energy from the mains so as to be able to charge the battery provided power supply units and to be able to supply tools directly when they are used at a position where a mains connection is available.

The current invention will be elucidated hereinafter with reference to the annexed drawings, in which:

Figure 1 shows a perspective view of a user of a combination of a hammer drilling machine and a battery power supply unit forming a first embodiment of the current invention;

figure 2 shows a perspective view of a battery charging unit;

figure 3 is a perspective view of a combination of a jig saw machine and a mains power supply unit;

figure 4 is a battery charging unit powered by solar cells;

figure 5 shows a diagram of a combination of a power supply unit and an appliance as according to a first embodiment of the present invention; and

figure 6 is a diagram of a combination of a mains power supply unit and an appliance as according to a first embodiment of the present invention.

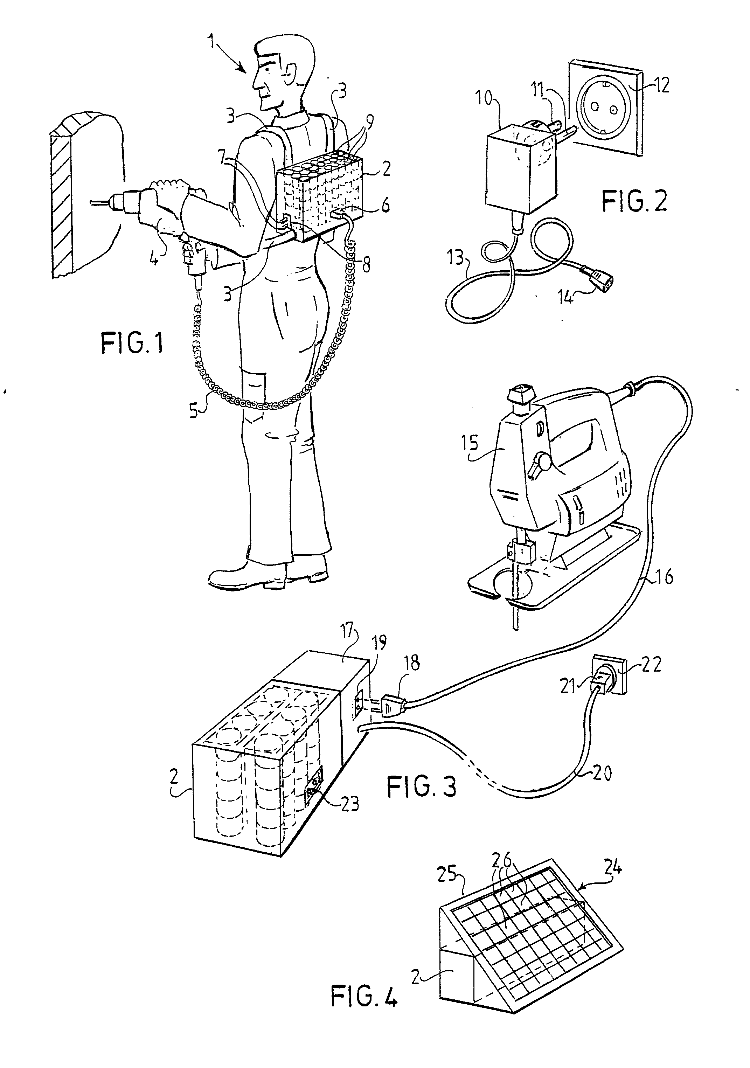

The user 1 shown in figure 1 carries a battery power supply unit 2 which is fastened onto the back by means of straps 3. The user 1 is using a drilling machine 4 which is connected to the battery power supply unit 2 by means of a spiral cord 5 and a connector plug 6. Plug 6 is provided with pins (not shown in the drawing) which fit into socket bushings arranged in the battery power supply unit. Battery power supply unit 2 is further provided with a socket bushing 8 provided with contact pins 7 to which can be connected up a mains power supply unit for recharging the battery cells.

As a result of the low voltage level a thin insulation can suffice so that the spiral cord can take a thin form. The combination of the lightness of the cord and its automatically adapting length do away in considerable measure with the inconvenience of classical mains leads.

Instead of a spiral cord the battery power supply unit may be provided with an automatic fast wind device such as the type known from vacuum cleaners. These known wind-in devices are however too bulky to be applied in portable equipment; here however, because of the lightness of the cord and in the case of the present low voltage level, they can be used in portable appliances.

With the voltage level according to the invention, namely between 24V and 110V, a large number of battery cells connected in series are employed. It is conceivable that for one reason or another one of these cells becomes defective and forms an interruption. It is then advisable to short-circuit this cell, since the resulting voltage - in view of the large number of cells - is still great enough to supply the tool. Metal brackets which short-circuit the relevant cell can be used for this purpose. The user must of course determine which cell has become defective, using a universal meter.

Figure 2 shows a mains power supply unit 10 which can be inserted by means of plug pins 11 into a wall socket 12. This mains power supply unit 10 is provided with a transformer with which the mains voltage is transformed to a voltage of the desired level. The mains power supply unit 10 is further provided with a rectifier.

Attached to mains power supply unit 10 is a cord 13 on th end of which is fitted a plug 14 provided with bushings. Using this plug which can be inserted into the socket 8 of the battery power supply unit 2, battery cells 9 can be charged. It is noted here that the dimensions of the mains power supply unit shown in figure 2 are quite small. This mains supply unit 10 is therefore only dimensioned for charging the battery cells.

Shown in figure 3 is another embodiment whereby a jig saw machine 15 according to the invention is connected to a mains power supply unit 17 by means of a cable 16. This unit 17 takes a considerably heavier form than the mains supply unit 10 shown in figure 2. Mains power supply unit 17 is thus not only suitable for recharging a battery power supply unit but also for direct powering of a hand tool. It is even possible to dimension mains power supply unit 2 so heavily that diverse tools are supplied simultaneously by the same mains power supply unit.

In the situation shown in figure 3 both the saw 15 and the battery power supply unit 2 are supplied. For this purpose the battery power supply unit 2 is placed against mains power supply unit 17 such that the pins 7 of the socket bushing 8 of the battery power supply unit are inserted into the socket bushings (not shown in the drawing) of mains power supply unit 17.

Figure 4 shows yet another embodiment of the power supply unit. This power supply unit 24 is provided with a solar energy panel 25 on which are arranged a number of solar cells 26. By locating this panel such that it receives as much light as possible for the longest possible period of time, it is possible to recharge the battery power supply unit 2 that is fitted releasably in the solar panel. This embodiment can be of importance in regions where no mains voltage is available. Such a power supply unit is of course provided with the necessary circuits to convert the variable voltage generated by these solar cells 26 into a voltage that is suitable for supplying to the battery cells.

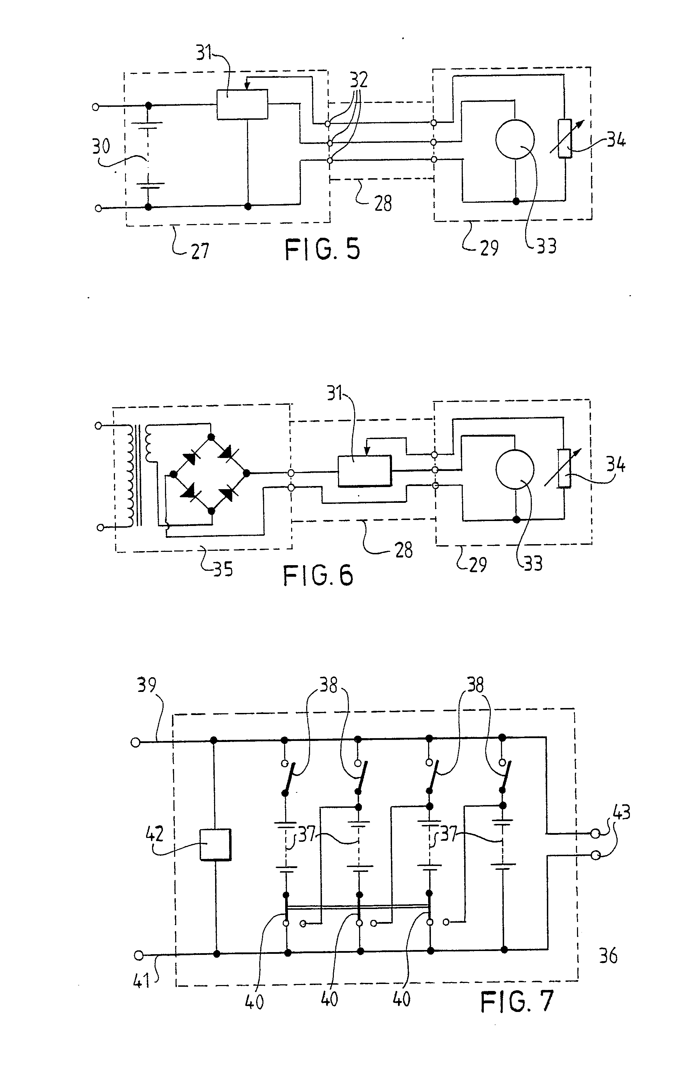

Illustrated in figure 5 is a connection diagram of a battery power supply unit 27 which is coupled by means of a three-core cable 28 to an electrical appliance 29. Power supply unit 27 comprises an accumulator battery 30 and a voltage control device 31 connected electrically thereto. The output voltage of this voltage control device 31 is applied to the two output clamps 32 of battery power supply unit 27. A chopper can for example be used as voltage control device. The output voltage is then fed via cable 28 to the appliance provided with a motor 33.

The appliance 29 is also provided with a resistance which can be controlled by means of a push-button. The one terminal of the resistance 34 is connected to one of the feed wires of cable 28 while the other terminal of resistance 34 is connected to a third core of cable 28, this core being connected to the voltage control device 31 such that it can be controlled by means of the adjustable resistance 34.

Instead of a resistance it is of course possible to use as signal generator another element the value of which is adjustable. It is likewise possible to select another configuration.

In this way it is possible to employ one voltage control device for several tools so that not every tool requires to be equipped with a separate voltage control device, but only with a signal generator, which considerably limits the cost price of the tool. Such a device can of course also be used with a mains power supply unit instead of a battery power supply unit as shown here.

Figure 6 shows a diagram of another embodiment of the current invention, whereby the voltage control device 31 is formed as a separate unit that is accommodated in the cable 28. This unit 31 is likewise controllable from the appliance 29 by means of a resistance 34. The embodiment shown in figure 6 involves a mains power supply unit. Such a voltage control unit incorporated in the cable can of course also be employed with a battery power supply unit.

The voltage control unit may also be accommodated in a separate box which can be connected by means of a socket outlet to the battery power supply unit or the mains power supply unit.

The advantage of a separate voltage control device that is neither accommodated in the consuming appliance, as is usual, nor forms part of the power supply unit is that one voltage control device can be used with different power supply units, namely a mains power supply unit and a battery power supply unit, and that different user appliances can likewise be connected. These consuming appliances must then be provided with a signal generator for regulation of the voltage control device.

The voltage control unit 31 may however also be provided with an actuating device such as a push-button. The need for a signal generator on the tool then disappears, although so also does the ease of operation from the tool itself.

Figure 7 shows the diagram of a battery power supply unit 36 which is provided with four accumulator batteries 37. The positive terminal of each of the batteries 37 can be connected by means of a switch 38 to a positive charging terminal 39. The negative terminal of each of the accumulator batteries 37 can be connected by means of a two-way switch 40 to a negative charging terminal 41. The two-way switches 40 can however also connect the negative terminal of each of the accumulator batteries 37 to the positive terminal of the preceding battery 37.

Arranged for the purpose of protecting the accumulator batteries is a voltage protection circuit 42. By means of the circuit shown in this diagram it is possible to charge each of the batteries 37 in parallel by causing the switches 40 to connect the negative terminals of each of the batteries 37 to the negative terminal 41 and by closing switches 38 so that each of the positive terminals of batteries 38 is connected to the positive charging terminal 39.

The battery power supply unit may also be provided with a charging state indicator, e.g. in the form of a LED display. During discharge the switches 40 connect each negative terminal of accumulator batteries 37 to the positive terminal of the preceding battery, whereby the voltage level can be selected by means of the switches 38. This voltage level is then supplied over the output terminals 43.

The protective circuit 42 prevents overcharging of the battery cells, and also protects them against short-circuiting of the charging terminals 39, 41. In order to protect the battery cells against short-circuiting of the output terminals 43 it is possible to incorporate a protective circuit on the output side of the batteries 37. The output terminal of the mains power supply unit 35 can likewise be safeguarded in this way.

The embodiments shown have all related to a tool provided with an electro-motor; it is also possible for the tool to be provided with a heating element or a lamp for example. In the case of tools driven by an electro-motor it is important that the starting point for the production of the necessary motors can be existing motors suitable for a mains voltage of 220V, since the same plate iron can be employed for a level of ca. 50V a for 220V, while the windings can be formed with double-thickness wire and half the number of windings.

The above embodiments all relate to electrical hand tools. The invention can also be used with household electrical appliances such as mixers, vacuum cleaners, shavers, or electric toothbrushes.

## Claims

1. Electrical appliance connected by means of a cable to separate power supply unit, **characterized in that** the nominal value of the supply voltage is greater than 24V but smaller than 110V.

2. Electrical appliance as claimed in claim 1, **characterized in that** the nominal value of the supply voltage is greater than 36V but smaller than 75V.

3. Electrical appliance as claimed in claim 2, **characterized in that** the nominal value of the supply voltage is greater than 42V but smaller than 60V.

4. Electrical appliance as claimed in any of the foregoing claims, **characterized in that** between an energy source accommodated in the power supply unit and an energy converter accommodated in the appliance is connected a control device.

5. Electrical appliance as claimed in claim 4, **characterized in that** the voltage control device is incorporated in said appliance.

6. Electrical appliance as claimed in claim 4, **characterized in that** the control device is incorporated in the cable.

7. Electrical appliance as claimed in claim 4, **characterized in that** the control device is incorporated in the power supply unit.

8. Electrical appliance as claimed in claim 5, 6 or 7, **characterized in that** the control device can be controlled from said appliance.

9. Electrical appliance as claimed in any of the foregoing claims, **characterized in that** the power supply unit is provided with at least two terminals, each for a tool, whereby said appliances are connected in parallel.

10. Electrical appliance as claimed in any of the foregoing claims, **characterized in that** the power supply unit is formed by an electrical energy source provided with a rechargeable battery.

11. Electrical appliance as claimed in claims 7 and 10, **characterized in that** the control device is formed by a switch for changing the number of battery cells connected between the output terminals.

12. Electrical appliance as claimed in claim 11, **characterized in that** the switch is suitable for changing the number of battery cells connected in series.

13. Electrical appliance as claimed in claim 10, **characterized in that** the control device takes the form of a chopper.

14. Electrical appliance as claimed in any of the claims 10-13, **characterized in that** the electrical energy source is provided with a charging state indicator and with a charging terminal.

15. Electrical appliance as claimed in claim 14, **characterized in that** the charging terminal is connected to the battery cells such that they can be recharged at least group-wise in parallel.

16. Electrical appliance as claimed in any of the preceding claims, characterized in that each of the battery cells can be short circuited by means of a connecting device.

17. Electrical appliance as claimed in any of the claims 10-16 , **characterized by** a protective device for the batteries.

18. Electrical appliance as claimed in claim 17, **characterized in that** the protective device takes the form of a safety indicator.

19. Electrical appliance as claimed in any of the claims 9-18, **characterized in that** the battery power supply unit is provided with an automatic charging voltage control device.

20. Electrical appliance as claimed in any of he claims 1-9, **characterized in that** the power supply unit is formed by an external energy source connected to an external source.

21. Electrical appliance as claimed in claim 20, **characterized in that** the external energy source is suitable for recharging the electrical energy source.

22. Electrical appliance as claimed in any of the claims 1-10, **characterized in that** the power supply unit is provided with a mains terminal and with means for converting the mains voltage to the supply voltage.

23. Electrical appliance as claimed in any of the foregoing claims, **characterized in that** the power supply unit is provided with means enabling it to be worn on the body.

24. Electrical appliance as claimed in any of the foregoing claims, **characterized in that** the cable is a spiral cord.

25. Electrical appliance as claimed in any of the claims 1-23, **characterized in that** the power supply unit is provided with an automatic wind-up device for the cord.

26. Electrical appliance as claimed in any of the claims 10-19, **characterized in that** the battery power supply unit is provided with means for short-circuiting at least one battery cell.

27. Electrical appliance as claimed in any of the foregoing claims, **characterized in that** the power supply unit is provided with solar cells.

28. Electrical appliance as claimed in any of the foregoing claims, **characterized in that** said appliance is formed by a hand tool or by a household appliance.

FIG.1

FIG.2

FIG.3

FIG.4

FIG. 5

FIG. 6

FIG. 7

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 432 294 (J. BECH)<br>* Page 1, lines 1-15; figures 1-6 * | 1,10,17 ,23,24, 27,28 | H 02 J    7/00<br>H 01 M    2/10<br>H 01 M   10/42 |
| A | US-A-3 919 615 (NIECKE)<br>* Column 7, lines 15-45; figures 1-6 * | 1,10,14 ,22,23, 28 | |
| A | DE-A-3 103 286 (KRESS-ELEKTRIK)<br>* Page 17, lines 4-11; figures 1-7 * | 5,8 | |
| A | US-A-3 963 972 (G.M. TODD)<br>* Column 3, lines 9-38; figure 5 * | 9 | |
| A | GB-A-1 590 375 (CHLORIDE GROUP LTD)<br>* Page 4, lines 6-26; figure 1 * | 11,12 | |
| A | US-A-4 025 860 (SHIBATA)<br>* Column 3, lines 29-55; figure 3 * | 13 | |
| A | GB-A-2 089 592 (PAG POWER LTD)<br>* Page 2, lines 89-93; figure * | 15 | **TECHNICAL FIELDS SEARCHED (Int. Cl.4)** |
| A | US-A-4 109 193 (SCHULTHEIS)<br>* Column 4, lines 30-68; column 5, lines 1-21; figures 1-4 * | 18,19, 22 | H 02 J<br>B 23 B<br>B 25 D<br>B 25 F |
| A | NL-A-7 116 583 (R. LUCAS)<br>* Page 8, lines 5-22; figure 5 * | 25 | H 01 M<br>H 01 R |

The present search report has been drawn up for all claims

| Place of search | Date of completion of the search | Examiner |
|---|---|---|
| THE HAGUE | 09-08-1988 | GOETZ P.A. |

EPO FORM 1503 03.82 (P0401)